# EUROPEAN PATENT APPLICATION

(11) **EP 4 663 672 A1**
(43) Date of publication of application: **17.12.2025**
(21) Application number: 24753430.8
(22) Date of filing: 08.02.2024
(51) Int. Cl.: C08G 18/08, C08G 18/10, C08G 18/32, C08K 5/205, C08L 75/04, C09J 11/06, C09J 175/04

(54) **URETHANE RESIN-FORMING COMPOSITION, COMPOSITION FOR URETHANE ADHESIVE, ADHESIVE FOR AUTOMOBILE STRUCTURE, AND CURED PRODUCT**

(30) Priority: 09.02.2023 JP 2023018705; 09.03.2023 JP 2023036514; 08.05.2023 JP 2023076566
(71) Applicant: Tosoh Corporation, Yamaguchi 746-8501 (JP)
(72) Inventor: SHINOZUKA Yuji, Yokkaichi-shi, Mie 510-8540 (JP)
(74) Representative: TBK
(86) International application number: PCT/JP2024/004414
(87) International publication number: WO 2024/166987

(57) **Abstract**

A urethane resin-forming composition, containing: a curing agent (A) containing a polyol, an isocyanate group-terminated prepolymer (B), and a compound (C), wherein the compound (C) is a compound represented by formula (1):

R¹-NHCOO-R² (1)

wherein R¹ and R² are each independently an alkyl group, an alicyclic hydrocarbon group, an aryl group, or a heterocyclic group.

## Description

### [Technical Field]

The present disclosure relates to a urethane resin-forming composition, a urethane adhesive composition, an adhesive for automobile structure, and a cured product.

### [Background Art]

As adhesives, various types such as epoxy-based adhesives, urethane-based adhesives, and the like are known. In adhesives for structure, strength and durability are necessary, and particularly in automobile applications, a high glass transition temperature (Tg) is required from the viewpoint of strength stability in the operating temperature range. Generally, epoxy-based adhesives have a high Tg and high strength as compared to urethane-based adhesives, but are brittle.

For this reason, in adhesives for structure where toughness is required, urethane-based adhesives are attracting attention. As urethane-based adhesives, reactive two-component adhesives are sometimes used. As such an adhesive, for example, PTL 1 discloses a urethane-based adhesive composition containing a first liquid containing a prepolymer obtained by reacting a polyisocyanate and a polyol, and a second liquid containing a polyol and a catalyst, wherein the first liquid contains, as constituent components, a prepolymer obtained by reacting a polyisocyanate and a high molecular weight polyol (I) having a number average molecular weight of 1000 or more, and a filler, and the second liquid contains a high molecular weight polyol (II) having a number average molecular weight of 1000 or more and a low molecular weight polyol having a number average molecular weight of less than 1000, wherein the molar ratio of (I), (II) and the low molecular weight polyol is a predetermined amount. According to the two-component urethane-based adhesive composition of PTL 1, it is stated that while maintaining the effect of obtaining good adhesive performance without performing primer treatment or sanding treatment, the storage stability of the first liquid is also excellent.

### [Citation List]

### [Patent Literature]

[PTL 1] International Publication No. WO 2009/047962

### [Summary of Invention]

### [Technical Problem]

However, although conventional urethane-based adhesives, including the urethane-based adhesive composition described in PTL 1, show a certain tendency for improvement in toughness, it is not sufficient, and further improvement in toughness is required.

Therefore, one aspect of the present disclosure is directed to providing a urethane resin-forming composition and a urethane adhesive composition that contribute to the production of an adhesive having high toughness. Also, another aspect of the present disclosure is directed to providing an adhesive for automobile structure and a cured product having high toughness.

### [Solution to Problem]

According to one aspect of the present disclosure, the following aspects (1) to (15) are provided.
(1) A urethane resin-forming composition, containing:
   a curing agent (A) containing a polyol,
   an isocyanate group-terminated prepolymer (B), and
   a compound (C),
   wherein the compound (C) is a compound represented by formula (1):

      R¹-NHCOO-R² (1)
   wherein R¹ and R² are each independently an alkyl group, an alicyclic hydrocarbon group, an aryl group, or a heterocyclic group.
(2) The composition according to (1), wherein the curing agent (A) contains a cross-linking component (a-1).
(3) The composition according to (1), wherein the curing agent (A) contains at least one diol (a-2) selected from the group consisting of aliphatic diols and alicyclic diols.
(4) The composition according to (1), wherein the curing agent (A) contains:
   a cross-linking component (a-1), and
   at least one diol (a-2) selected from the group consisting of aliphatic diols and alicyclic diols.
(5) The composition according to any one of (1) to (4), wherein the isocyanate group-terminated prepolymer (B) contains a reaction product of:
   a polyol (b-1) having a number average molecular weight of 500 or more,
   a polyisocyanate (b-2), and
   a cross-linking component (b-3) which is an optional component.
(6) The composition according to (1), wherein
   the curing agent (A) contains:
      a cross-linking component (a-1), and
      at least one diol (a-2) selected from the group consisting of aliphatic diols and alicyclic diols, and
   the isocyanate group-terminated prepolymer (B) contains a reaction product of:
      a polyol (b-1) having a number average molecular weight of 500 or more,
      a polyisocyanate (b-2), and
      a cross-linking component (b-3) which is an optional component.
(7) The composition according to any one of (1) to (6), wherein the isocyanate group-terminated prepolymer (B) contains a reaction product of:
   a polyol (b-1) having a number average molecular weight of 500 or more,
   a polyisocyanate (b-2), and
   a cross-linking component (b-3) which is an optional component,
   wherein the polyol (b-1) has a carbonate bond.
(8) The composition according to (1), wherein
   the curing agent (A) contains:
      a cross-linking component (a-1), and
      at least one diol (a-2) selected from the group consisting of aliphatic diols and alicyclic diols, and
   the isocyanate group-terminated prepolymer (B) contains a reaction product of:
      a polyol (b-1) having a number average molecular weight of 500 or more,
      a polyisocyanate (b-2), and
      a cross-linking component (b-3) which is an optional component,
   wherein the polyol (b-1) has a carbonate bond.
(9) The composition according to any one of (1) to (8), wherein a urethane group concentration of a resin obtained by curing the urethane resin-forming composition is 2000 mmol/kg or more and 5000 mmol/kg or less.
(10) The composition according to any one of (1) to (9), wherein a total of a content of cross-linkable groups contained in the curing agent (A) and a content of cross-linkable groups contained in the isocyanate group-terminated prepolymer (B) is 50 mmol/kg or more and 1000 mmol/kg or less in the urethane resin-forming composition.
(11) The composition according to any one of (1) to (10), wherein a melting point of the compound (C) is 100°C or less.
(12) A urethane adhesive composition, containing the urethane resin-forming composition according to any one of (1) to (11).
(13) The composition according to (12), wherein a content of solvent is 1.0% by mass or less.
(14) An adhesive for automobile structure, containing the composition according to (12).
(15) A cured product of the composition according to any one of (1) to (11).

### [Advantageous Effects of Invention]

According to one aspect of the present disclosure, it is possible to provide a urethane resin-forming composition and a urethane adhesive composition that contribute to the production of an adhesive having high toughness. Also, according to another aspect of the present disclosure, it is possible to provide an adhesive for automobile structure and a cured product having high toughness.

### [Description of Embodiments]

Hereinafter, exemplary embodiments for carrying out each aspect of the present disclosure will be described in detail.

In this specification, a numerical range indicated using "to" indicates a range including the numerical values described before and after "to" as a minimum value and a maximum value, respectively. The minimum value or maximum value of a numerical range indicated using "to," "or more," or "or less" can be arbitrarily combined with the maximum value or minimum value of another numerical range indicated using "to," "or more," or "or less." Also, individually described upper limit values and lower limit values can also be arbitrarily combined.

### [Urethane Resin-Forming Composition]

A urethane resin-forming composition according to an embodiment of the present disclosure contains:
a curing agent (A) containing a polyol,
an isocyanate group-terminated prepolymer (B), and
a compound (C),
wherein the compound (C) is a compound represented by formula (1):

   R¹-NHCOO-R² (1)
wherein R¹ and R² are each independently an alkyl group, an alicyclic hydrocarbon group, an aryl group, or a heterocyclic group.

By blending compound (C) with a urethane resin-forming composition containing a curing agent (A) containing a polyol and an isocyanate group-terminated prepolymer (B), a urethane resin-forming composition having high toughness is obtained.

Although the reason why the cured product of the urethane resin-forming composition of one aspect of the present disclosure exhibits high toughness is not necessarily clear, the present inventors presume as follows.

That is, the urethane resin-forming composition of one aspect of the present disclosure contains a curing agent (A) containing a polyol, an isocyanate group-terminated prepolymer (B), and a compound (C), wherein the compound (C) is a compound represented by formula (1). When a compound represented by formula (1) is blended into a urethane resin-forming composition containing a curing agent (A) containing a polyol and an isocyanate group-terminated prepolymer (B), it exhibits an effect of suppressing very local motion of flexible segments; therefore, it is presumed that the flexibility of the resin as a whole is not significantly impaired, resulting in an increase in rigidity, and as a result, toughness is improved.

### [[Curing Agent (A)]]

The curing agent (A)
may contain a cross-linking component (a-1),
may contain at least one diol (a-2) selected from the group consisting of aliphatic diols and alicyclic diols, and
may contain a cross-linking component (a-1) and at least one diol (a-2) selected from the group consisting of aliphatic diols and alicyclic diols.

As the cross-linking component (a-1), for example, a polyol having an average number of functional groups of 3 or more can be mentioned. Examples of polyols having an average number of functional groups of 3 or more include glycerin, trimethylolpropane, pentaerythritol, N,N-bis(hydroxypropyl)-N-hydroxyethylamine, triethanolamine, triisopropanolamine, monomer polyols of ethylenediamine propylene oxide modified products, monomer polyols of trimethylolpropane propylene oxide modified products, and pentaerythritol propylene oxide modified products. In addition to these, examples include polycaprolactone polyols and the like, obtained by ring-opening addition of cyclic esters such as ε-caprolactone, β-butyrolactone, γ-butyrolactone, γ-valerolactone, δ-valerolactone, using a polyol such as glycerin, trimethylolpropane, or pentaerythritol as an initiator.

The cross-linking component (a-1) may contain only one of these, or may contain two or more thereof.

Among the diols (a-2), examples of aliphatic diols include aliphatic diol monomers and aliphatic diol polymers, and examples of alicyclic diols include alicyclic diol monomers and alicyclic diol polymers.

Examples of aliphatic diol monomers include ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, neopentyl glycol; diethylene glycol, dipropylene glycol; and the like.

Examples of alicyclic diol monomers include 1,4-cyclohexanediol, cycloheptanediol, cyclooctanediol, 1,4-cyclohexanedimethanol, hydroxypropylcyclohexanol, isohexide, tricyclo[5.2.1.02,6]decane-4,8-dimethanol, and alkylene oxide adducts thereof, and the like.

Examples of aliphatic or alicyclic diol polymers include aliphatic or alicyclic diol polymers containing one or more bonds selected from the group consisting of ester bonds, ether bonds, and carbonate bonds, with aliphatic or alicyclic polyester diols, aliphatic or alicyclic polyether diols, and aliphatic or alicyclic polycarbonate diols being more preferable, and aliphatic or alicyclic polyether diols being even more preferable.

Examples of aliphatic or alicyclic polycarbonate diols include those obtained by dealcoholization reaction or dephenolation reaction of one or more types of aliphatic or alicyclic diols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, and dimer acid diols; with one or more types of aliphatic or alicyclic carbonates such as dialkyl carbonates like dimethyl carbonate and diethyl carbonate, and alkylene carbonates like ethylene carbonate and propylene carbonate.

Examples of aliphatic or alicyclic polyester diols include those obtained by polycondensation reaction of one or more types of aliphatic or alicyclic dicarboxylic acids such as succinic acid, tartaric acid, oxalic acid, malonic acid, glutaric acid, adipic acid, pimelic acid, suberic acid, glutaconic acid, azelaic acid, sebacic acid, 1,4-cyclohexyldicarboxylic acid, α-hydromuconic acid, β-hydromuconic acid, α-butyl-α-ethylglutaric acid, α,β-diethylsuccinic acid, maleic acid, and fumaric acid, anhydrides thereof, and the like; with one or more types of aliphatic or alicyclic diols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, and dimer acid diol. Also, examples of aliphatic or alicyclic polyester diols include polyester-amide diols obtained by replacing a part of aliphatic or alicyclic diols with aliphatic or alicyclic diamines such as hexamethylenediamine or isophorone diamine, or aliphatic or alicyclic amino alcohols such as monoethanolamine.

Examples of aliphatic or alicyclic polyether diols include polyether diols obtained by addition polymerization of alkylene oxides such as ethylene oxide, propylene oxide, or butylene oxide, using as an initiator an aliphatic or alicyclic compound having two active hydrogen groups, wherein examples of such initiators include aliphatic or alicyclic diols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, and dimer acid diol; or aliphatic or alicyclic diamines such as ethylenediamine, and propylenediamine. Also, examples of polyether diols include polyether diols obtained by ring-opening polymerization of alkyl glycidyl ethers such as methyl glycidyl ether, or cyclic ether monomers such as tetrahydrofuran.

The diol (a-2) may contain only one of these, or may contain two or more thereof.

The diol (a-2) preferably has a number average molecular weight of 4000 g/mol or less, more preferably 2500 g/mol or less, and even more preferably 1500 g/mol or less.

The number average molecular weight in the present disclosure may be determined by a measurement method capable of high-precision measurement; for example, one measured by a method (titration method) compliant with JIS K 0070-1992 can be adopted.

### [[Isocyanate Group-Terminated Prepolymer (B)]]

The isocyanate group-terminated prepolymer (B) contains a reaction product of:
a polyol (b-1) having a number average molecular weight of 500 or more,
a polyisocyanate (b-2), and
a cross-linking component (b-3) which is an optional component.

Examples of the polyol (b-1) having a number average molecular weight of 500 or more include polyols having a number average molecular weight of 500 or more and having one or more bonds selected from the group consisting of ester bonds, ether bonds, and carbonate bonds, and it is preferable to have a carbonate bond. Polyester polyols, polyether polyols, and polycarbonate polyols are preferable; polyether polyols and polycarbonate polyols are more preferable; and polycarbonate polyols are even more preferable.

Examples of polycarbonate polyols include those obtained by dealcoholization reaction or dephenolation reaction of one or more types of polyols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, glycerin, trimethylolpropane, dimer acid diol, ethylene oxide or propylene oxide adducts of bisphenol A, bis(β-hydroxyethyl)benzene, and xylylene glycol; with one or more types of carbonates such as dialkyl carbonates like dimethyl carbonate and diethyl carbonate, alkylene carbonates like ethylene carbonate and propylene carbonate, diphenyl carbonate, dinaphthyl carbonate, dianthryl carbonate, diphenanthryl carbonate, and diindanyl carbonate.

Examples of polyester polyols include those obtained by polycondensation reaction of one or more types of dicarboxylic acids such as phthalic acid, isophthalic acid, terephthalic acid, naphthalenedicarboxylic acid, succinic acid, tartaric acid, oxalic acid, malonic acid, glutaric acid, adipic acid, pimelic acid, suberic acid, glutaconic acid, azelaic acid, sebacic acid, 1,4-cyclohexyldicarboxylic acid, α-hydromuconic acid, β-hydromuconic acid, α-butyl-α-ethylglutaric acid, α,β-diethylsuccinic acid, maleic acid, and fumaric acid, anhydrides thereof, and the like; with one or more types of ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, glycerin, trimethylolpropane, dimer acid diol, ethylene oxide or propylene oxide adducts of bisphenol A, bis(β-hydroxyethyl)benzene, xylylene glycol, and the like. Also, as the polyol (b-1), polyester-amide polyols obtained by replacing a part of these alcohols with low molecular weight polyamines such as hexamethylenediamine, or isophorone diamine, or low molecular weight amino alcohols such as monoethanolamine can also be mentioned.

Examples of polyether polyols include polyether polyols obtained by addition polymerization of alkylene oxides such as ethylene oxide, propylene oxide, or butylene oxide, using as an initiator a compound having two active hydrogen groups, wherein examples of such initiators include low molecular weight polyols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diol, bisphenol A, bis(β-hydroxyethyl)benzene, and xylylene glycol; or low molecular weight polyamines such as ethylenediamine, propylenediamine, toluenediamine, meta-phenylenediamine, diphenylmethanediamine, and xylylenediamine. Also, examples of polyether polyols include polyether polyols obtained by ring-opening polymerization of alkyl glycidyl ethers such as methyl glycidyl ether, aryl glycidyl ethers such as phenyl glycidyl ether, or cyclic ether monomers such as tetrahydrofuran.

The polyol (b-1) may contain only one of these, or may contain two or more thereof.

The number average molecular weight of the polyol (b-1) is preferably 500 or more and 10000 or less, more preferably 500 or more and 7000 or less, and even more preferably 500 or more and 4000 or less.

As the polyisocyanate (b-2), polyisocyanates having two or more isocyanate groups in the molecule can be mentioned. Examples of polyisocyanates include organic polyisocyanates. Examples of organic polyisocyanates include aromatic polyisocyanates, araliphatic polyisocyanates, aliphatic polyisocyanates, alicyclic polyisocyanates, and the like. The polyisocyanate may contain only one type of these, or may contain two or more types of these. Among these, aromatic polyisocyanates are preferable from the viewpoint of reactivity and viscosity.

Examples of aromatic polyisocyanates include 2,4-tolylene diisocyanate, 2,6-tolylene diisocyanate, 2,4-tolylene diisocyanate/2,6-tolylene diisocyanate mixture, 2,2'-diphenylmethane diisocyanate, 4,4'-diphenylmethane diisocyanate, 2,2'-diphenylmethane diisocyanate/4,4'-diphenylmethane diisocyanate mixture, 2,4'-diphenylmethane diisocyanate, 2,4'-diphenylmethane diisocyanate/4,4'-diphenylmethane diisocyanate mixture, 2,2'-diphenylmethane diisocyanate/2,4'-diphenylmethane diisocyanate/4,4'-diphenylmethane diisocyanate mixture, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, and the like.

Examples of araliphatic polyisocyanates include 1,3-xylylene diisocyanate, 1,4-xylylene diisocyanate, 1,3-xylylene diisocyanate/1,4-xylylene diisocyanate mixture, 1,3-bis(1-isocyanato-1-methylethyl)benzene, 1,4-bis(1-isocyanato-1-methylethyl)benzene, 1,3-bis(1-isocyanato-1-methylethyl)benzene/1,4-bis(1-isocyanato-1-methylethyl)benzene mixture, ω,ω'-diisocyanato-1,4-diethylbenzene, and the like.

Examples of aliphatic polyisocyanates include tetramethylene diisocyanate, hexamethylene diisocyanate, 2-methylpentane-1,5-diisocyanate, 3-methylpentane-1,5-diisocyanate, lysine diisocyanate, trioxyethylene diisocyanate, ethylene diisocyanate, trimethylene diisocyanate, octamethylene diisocyanate, nonamethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6,11-undecanetriisocyanate, 1,3,6-hexamethylenetriisocyanate, 1,8-diisocyanato-4-isocyanatomethyloctane, 2,5,7-trimethyl-1,8-diisocyanato-5-isocyanatomethyloctane, bis(isocyanatoethyl) carbonate, bis(isocyanatoethyl) ether, 1,4-butylene glycol dipropyl ether-α,α'-diisocyanate, lysine diisocyanate methyl ester, 2-isocyanatoethyl-2,6-diisocyanatohexanoate, 2-isocyanatopropyl-2,6-diisocyanatohexanoate, and the like.

Examples of alicyclic polyisocyanates include isophorone diisocyanate, cyclohexane diisocyanate, bis(isocyanatomethyl)cyclohexane, dicyclohexylmethane diisocyanate, methylcyclohexane diisocyanate, dicyclohexyldimethylmethane diisocyanate, 2,2'-dimethyldicyclohexylmethane diisocyanate, bis(4-isocyanato-n-butylidene)pentaerythritol, hydrogenated dimer acid diisocyanate, 2-isocyanatomethyl-3-(3-isocyanatopropyl)-5-isocyanatomethyl-bicyclo[2.2.1]heptane, 2-isocyanatomethyl-3-(3-isocyanatopropyl)-6-isocyanatomethyl-bicyclo[2.2.1]heptane, 2-isocyanatomethyl-2-(3-isocyanatopropyl)-5-isocyanatomethyl-bicyclo[2.2.1]heptane, 2-isocyanatomethyl-2-(3-isocyanatopropyl)-6-isocyanatomethyl-bicyclo[2.2.1]heptane, 2-isocyanatomethyl-3-(3-isocyanatopropyl)-5-(2-isocyanatoethyl)-bicyclo[2.2.1]heptane, 2-isocyanatomethyl-3-(3-isocyanatopropyl)-6-(2-isocyanatoethyl)-bicyclo[2.2.1]heptane, 2-isocyanatomethyl-2-(3-isocyanatopropyl)-5-(2-isocyanatoethyl)-bicyclo[2.2.1]heptane, 2-isocyanatomethyl-2-(3-isocyanatopropyl)-6-(2-isocyanatoethyl)-bicyclo[2.2.1]heptane, 2,5-bis(isocyanatomethyl)-bicyclo[2.2.1]heptane, hydrogenated diphenylmethane diisocyanate, norbornane diisocyanate, hydrogenated tolylene diisocyanate, hydrogenated xylene diisocyanate, hydrogenated tetramethylxylene diisocyanate, and the like.

The polyisocyanate may contain only one of these, or may contain two or more thereof.

The content of the polyisocyanate (b-2) in the urethane resin-forming composition is preferably 750 mmol/kg or more and 3000 mmol/kg or less, and more preferably 1000 mmol/kg or more and 2500 mmol/kg or less.

The isocyanate group-terminated prepolymer (B) includes a cross-linking component (b-3) which is an optional component. That is, the isocyanate group-terminated prepolymer (B) may further include a structure derived from the cross-linking component (b-3). As the cross-linking component (b-3), for example, the same ones as the cross-linking component (a-1) can be mentioned.

### [[Content of Cross-linkable Groups]]

The total (i.e., cross-linking density) of the content of cross-linkable groups contained in the curing agent (A) and the content of cross-linkable groups contained in the isocyanate group-terminated prepolymer (B) in the urethane resin-forming composition is preferably 25 mmol/kg or more and 1200 mmol/kg or less, more preferably 50 mmol/kg or more and 1000 mmol/kg or less, even more preferably 100 mmol/kg or more and 800 mmol/kg or less, and particularly preferably 150 mmol/kg or more and 700 mmol/kg or less. When the content of cross-linkable groups is within this range, the fracture toughness value (G_{Ic}) becomes higher, and it is preferable because it has even more excellent toughness. In the case where the urethane resin-forming composition does not contain cross-linkable groups other than the cross-linking component (a-1) and the cross-linking component (b-3), the total of the content of cross-linkable groups contained in the curing agent (A) and the content of cross-linkable groups contained in the isocyanate group-terminated prepolymer (B) matches the total of the content of cross-linkable groups contained in the cross-linking component (a-1) and the cross-linking component (b-3).

Here, a cross-linkable group is a functional group that forms a cross-link. Therefore, to explain by taking a trifunctional polyol (e.g., glycerin) as an example, one hydroxyl group in one molecule forms a cross-link, and the remaining two hydroxyl groups do not contribute to cross-linking; thus, in this case, there is one cross-linkable group. That is, in the case of a trifunctional polyol, the content of cross-linkable groups is synonymous with the content of the trifunctional polyol, because the trifunctional polyol has one cross-linkable group.

### [[Properties of Curing Agent (A) and Isocyanate Group-Terminated Prepolymer (B)]]

It is preferable that at least one of the polyol (b-1) and the polyisocyanate (b-2) is liquid at 25°C and 1 atm.

It is preferable that at least one of the curing agent (A) and the isocyanate group-terminated prepolymer (B) is liquid at 25°C and 1 atm.

### [[Embodiments of Combinations of Curing Agent (A) and Isocyanate Group-Terminated Prepolymer (B)]]

### • Embodiment 1

The curing agent (A) contains:
a cross-linking component (a-1), and
at least one diol (a-2) selected from the group consisting of aliphatic diols and alicyclic diols, and
the isocyanate group-terminated prepolymer (B) contains a reaction product of:
a polyol (b-1) having a number average molecular weight of 500 or more,
a polyisocyanate (b-2), and
a cross-linking component (b-3) which is an optional component.

### • Embodiment 2

The curing agent (A) contains:
a cross-linking component (a-1), and
at least one diol (a-2) selected from the group consisting of aliphatic diols and alicyclic diols, and
the isocyanate group-terminated prepolymer (B) contains a reaction product of:
a polyol (b-1) having a number average molecular weight of 500 or more,
a polyisocyanate (b-2), and
a cross-linking component (b-3) which is an optional component,
wherein the polyol (b-1) has a carbonate bond.

The urethane resin-forming composition according to this aspect is not limited to these embodiments in any way.

### [[Compound (C)]]

Compound (C) is a compound represented by formula (1) and has one urethane bond in one molecule:

R¹-NHCOO-R² (1)

wherein R¹ and R² are each independently an alkyl group, an alicyclic hydrocarbon group, an aryl group, or a heterocyclic group.

As for the number of carbon atoms of the alkyl group, 1 to 8 is preferable, 1 to 5 is more preferable, and 1 to 3 is particularly preferable. When the number of carbon atoms of the alkyl group is in the above range, there is good matching with the size of the molecular chain, and there is a tendency to be able to impart high toughness.

Examples of the alicyclic hydrocarbon group include a cyclohexyl group, a cyclopentyl group, a decahydronaphthyl group, and the like. The alicyclic hydrocarbon group may have a substituent, and examples of the substituent include a linear or branched saturated hydrocarbon group.

Examples of the aryl group include a phenyl group, a naphthyl group, and the like. Also, the aryl group may have a substituent, and examples of the substituent include a linear or branched saturated hydrocarbon group.

Examples of the heterocyclic group include a pyrrole ring, a furan ring, a thienyl group, a phosphole ring, and the like. Also, the heterocyclic group may have a substituent, and examples of the substituent include a linear or branched saturated hydrocarbon group.

As for the combination of R¹ and R² in compound (C), from the viewpoint of miscibility with the urethane resin, melting point, and the like, a combination of an alkyl group (preferably, a methyl group or an ethyl group) and an alkyl group (preferably, a methyl group or an ethyl group), or a combination of an alkyl group (preferably, a methyl group or an ethyl group) and an aryl group (preferably, a phenyl group) is preferable.

Specific examples of compound (C) include methyl N-methylcarbamate, ethyl N-methylcarbamate, methyl N-ethylcarbamate, ethyl N-ethylcarbamate, ethyl N-phenylcarbamate, methyl N-phenylcarbamate, and the like; from the viewpoint that an adhesive having high toughness can be obtained, methyl N-methylcarbamate, ethyl N-methylcarbamate, ethyl N-phenylcarbamate, and methyl N-phenylcarbamate are preferable, methyl N-methylcarbamate, ethyl N-methylcarbamate, and ethyl N-phenylcarbamate are more preferable, and methyl N-methylcarbamate is particularly preferable.

Compound (C) preferably has a melting point measured in accordance with JIS K 0064:1992 of 100°C or less, more preferably 90°C or less, and even more preferably 75°C or less. Also, the lower limit of the melting point of compound (C) is preferably -90°C or higher. When the melting point of compound (C) is the above lower limit or higher, it becomes easy to uniformly disperse it into the urethane resin, and a stable toughness improvement effect is easily obtained.

The content of compound (C) in the urethane resin-forming composition is preferably 1% by mass or more and 30% by mass or less, more preferably 2% by mass or more and 25% by mass or less, even more preferably 3% by mass or more and 20% by mass or less, and particularly preferably 4% by mass or more and 18% by mass or less. When the content of compound (C) is the above lower limit or more, the effect of toughness improvement is more easily obtained remarkably. Also, when the content of compound (C) is the above upper limit or less, the effect of toughness improvement is easily obtained without reflecting the characteristics of compound (C) in the urethane resin.

The number average molecular weight of compound (C) is preferably 80 or more and 1000 or less, more preferably 100 or more and 800 or less, even more preferably 120 or more and 600 or less, and particularly preferably 140 or more and 400 or less. When the number average molecular weight of compound (C) is the above lower limit or more, the matching between the molecular chain of the urethane resin and the molecular size of compound (C) is good, and there is a tendency to be able to impart higher toughness. Also, when the number average molecular weight of compound (C) is the above upper limit or less, it can be handled more stably from the viewpoint of the viscosity and crystallinity of compound (C).

Compound (C) may be added to either or both of the curing agent (A) and the isocyanate group-terminated prepolymer (B) to form a two-component adhesive, or may be used alone to form a three-component adhesive.

The urethane group concentration of the resin obtained by curing the urethane resin-forming composition is preferably 2000 mmol/kg or more and 5500 mmol/kg or less, more preferably 2000 mmol/kg or more and 5000 mmol/kg or less, even more preferably 2600 mmol/kg or more and 4800 mmol/kg or less, and particularly preferably 2800 mmol/kg or more and 4500 mmol/kg or less. When the urethane group concentration of the resin is the above lower limit or more, the resin strength becomes sufficiently high, and high toughness can be imparted. Also, when the urethane group concentration of the resin is the above upper limit or less, the brittleness of the resin is suppressed, whereby the synergistic effect of adding compound (C) is more easily obtained.

### [[Physical Properties, General Properties, and Form of Urethane Resin-Forming Composition]]

The glass transition temperature of the resin obtained by curing the urethane resin-forming composition is preferably 60°C or higher, more preferably 65°C or higher, and even more preferably 70°C or higher. Particularly in automobile applications, a glass transition temperature in this range is required from the viewpoint of strength stability in the operating temperature range. A viscoelasticity measuring device is used for measuring the glass transition temperature (Tg), and the measurement mode is not limited to a specific one; shear, compression, three-point bending, or tensile measurement modes, etc., may be used; the measurement frequency was 10 Hz, the heating rate was 2°C/min, and the peak top temperature of the loss tangent (tanδ) was taken as the Tg when the measurement temperature range was -150°C to 250°C.

The urethane resin-forming composition is preferably liquid (i.e., has fluidity) at 25°C and 1 atm from the viewpoint of handleability. It is preferable that at least one of the curing agent (A) and the isocyanate group-terminated prepolymer (B) is liquid at 25°C and 1 atm.

The urethane resin-forming composition includes the curing agent (A), the isocyanate group-terminated prepolymer (B), and the compound (C). These may be a three-component type existing separately, or a two-component type in which compound (C) is mixed into at least one of the curing agent (A) and the isocyanate group-terminated prepolymer (B). The temperature and time for mixing the curing agent (A), the isocyanate group-terminated prepolymer (B), and the compound (C) can be, for example, 10 to 35°C for 1 to 60 minutes.

The method for mixing the curing agent (A) and the isocyanate group-terminated prepolymer (B) is not particularly limited; for example, they may be mixed manually with a spatula, or a method using a mechanical rotary mixer, a static mixer, or the like may be employed.

### [Urethane Adhesive Composition]

A urethane adhesive composition according to one aspect of the present disclosure includes the above-described urethane resin-forming composition.

The urethane adhesive composition may include other components other than the urethane resin-forming composition. As other components, those that do not react when the curing agent (A), the isocyanate group-terminated prepolymer (B), and the compound (C) are mixed are preferable. Examples of other components include additives other than the components constituting the urethane resin, such as fillers, colorants, antistatic agents, preservatives, and the like.

The urethane adhesive composition may contain a solvent, but it is preferable that the content of the solvent is 1.0% by mass or less. Also, the urethane adhesive composition may be substantially free of solvent, that is, it may be a solventless system. However, in cases where a solvent is included as an impurity, it substantially belongs to the category of "not containing a solvent."

### [Adhesive for Automobile Structure]

An adhesive for automobile structure according to one aspect of the present disclosure includes the above-described urethane adhesive composition. This adhesive has a high fracture toughness value (G_{Ic}) and possesses excellent toughness.

### [Cured Product]

A cured product according to one aspect of the present disclosure is a cured product of the above-described urethane resin-forming composition.

### [Examples]

Hereinafter, the present invention will be described more specifically based on Examples, but the present invention is not limited to the following Examples.

### [Preparation of Urethane Resin-Forming Composition]

### [Raw Materials]

- "MT"; MILLIONATE MT (monomeric MDI, manufactured by Tosoh Corporation), average molecular weight 250, f=2
- "TMP"; trimethylolpropane (manufactured by Mitsubishi Gas Chemical Company, Inc.), average molecular weight 134, f=3
- "PCD3000"; polycarbonate polyol N-968 (manufactured by Tosoh Corporation), average molecular weight 3000, f=2
- "PCD1000"; polycarbonate polyol N-965 (manufactured by Tosoh Corporation), average molecular weight 1000, f=2
- "PCD500"; polycarbonate polyol Kuraray Polyol C-590 (manufactured by Kuraray Co., Ltd.), hydroxyl value = 222.3 KOHmg/g, f=2
- "BG"; butylene glycol (manufactured by Mitsubishi Chemical Corporation), 1,4-butanediol, average molecular weight 90, f=2
- "CHDM"; 1,4-cyclohexanedimethanol (manufactured by Tokyo Chemical Industry Co., Ltd.)
- "PTMG250"; PTMG250 (manufactured by Mitsubishi Chemical Corporation), polytetramethylene ether glycol, average molecular weight 210, f=2
- "MDEA"; N-methyldiethanolamine (manufactured by Tokyo Chemical Industry Co., Ltd.), average molecular weight = 119, f=2
- "p-TolylDEA"; 2,2'-(p-tolylimino)diethanol (manufactured by Fujifilm Wako Pure Chemical Corporation)
- "Ethyl N-phenylcarbamate"; Ethyl N-phenylcarbamate (ethyl carbanilate) (phenylurethane manufactured by Tokyo Chemical Industry Co., Ltd.), melting point 52°C
- "Methyl N-phenylcarbamate"; Methyl N-phenylcarbamate (manufactured by Tokyo Chemical Industry Co., Ltd.), melting point 47°C
- "Ethyl N-methylcarbamate"; Ethyl N-methylcarbamate (manufactured by Tokyo Chemical Industry Co., Ltd.)
- "Methyl N-methylcarbamate"; Methyl N-methylcarbamate (manufactured by Fujifilm Wako Pure Chemical Corporation)
- "Diisononyl phthalate"; Diisononyl phthalate (manufactured by Tokyo Chemical Industry Co., Ltd.), melting point < 20°C
- "Talc"; Crown Talc R (manufactured by Matsumura Sangyo Co., Ltd.)
- "Zeolite"; Zeolam A-3 (manufactured by Tosoh Corporation)
- "Ethyl methyl sulfone"; Ethyl methyl sulfone (manufactured by Tokyo Chemical Industry Co., Ltd.), melting point 34°C
- "Ethyl phenyl sulfone"; Ethyl phenyl sulfone (manufactured by Tokyo Chemical Industry Co., Ltd.), melting point 42°C
- "Tributylphosphine oxide"; Tributylphosphine oxide (manufactured by Tokyo Chemical Industry Co., Ltd.), melting point 71°C
- "Trioctylphosphine oxide"; Trioctylphosphine oxide (manufactured by Tokyo Chemical Industry Co., Ltd.), melting point 54°C

### (Examples 1 to 15)

Each raw material for the curing agent was charged into a 2 L stirring vessel filled with nitrogen according to the formulations shown in Tables 1 to 14 and stirred, and while maintaining the temperature inside the stirring vessel at 70 to 80°C, mixed and stirred for about 1 to 3 hours to obtain various curing agents (A). In Table 1, "R (resin)" represents the ratio of NCO groups to OH groups (NCO/OH), which is a value that can be adjusted by the blending amount of the main agent and the blending amount of the curing agent. Also, in Examples 1 to 12, in each case, the example on the right side described with "-" indicates an example without filler addition, and the example on the left side indicates an example with filler addition. Therefore, the fracture toughness value (C_{Ic}) and cohesive failure rate were measured in the example with filler addition, and Tg was measured in the example without filler addition.

Also, each raw material of the main agent (isocyanate group-terminated prepolymer) (B) was charged into a 2 L stirring vessel filled with nitrogen according to the formulations shown in Tables 1 to 14 and stirred. Thereafter, while maintaining the temperature inside the stirring vessel at 70 to 80°C, the urethanization reaction was allowed to proceed for about 2 to 5 hours to obtain various isocyanate group-terminated prepolymers (B).

### [DCB Test (Fracture Toughness Value)]

The DCB test was conducted in accordance with ASTM D3433-99.
Resin thickness: Adjusted with a spacer to be 0.35 mm
   Spacer: Teflon (registered trademark) tape was used
Test piece shape: Contoured type was used
Test substrate: S50C steel material (electroless nickel plating treatment) was used
Test conditions: Pulled at 2 mm/min, and the fracture toughness value G_{Ic} was calculated based on the maximum load.
Calculation formula: G_{Ic} = [4L2(max)] (m) / [EB2]
   L(max) Load: (N)
   E Young's modulus of substrate (MPa): 208000
   B Width of substrate (mm): 25.49
   m Constant (from contoured type): 3.54

Compound (C) preheated to 70°C was added to the main agent (isocyanate group-terminated prepolymer (B)) such that the amount of compound (C) in the resin composition was 2.5 to 10% by mass, and mixed and defoamed.

Next, filler (talc 50% by mass / zeolite 50% by mass) was added to the mixture of compound (C) and the main agent such that the amount of filler in the system was 1/3, and mixed and defoamed.

After further adding the curing agent (A) and stirring and mixing for 30 seconds, it was applied to a substrate and fixed with a clamp. Then, it was cured under two-stage conditions of 25°C × 30 minutes and 180°C × 30 minutes.

To give a precrack to the substrate, a 0.35 mm thick Teflon (registered trademark) seal was attached 4.9 cm from the tip. Also, to make the application thickness of the adhesive uniform, a Teflon (registered trademark) seal of the same thickness was attached about 2 cm from the rear part of the substrate.

The fracture toughness values (G_{Ic}) obtained by the DCB test conducted under the above conditions are shown in Tables 1 to 14. In Tables 1 to 14, SCF means that Special Cohesive Failure has occurred.

### [Cohesive Failure Rate]

The fracture surface of the sample was observed visually, and the area ratio where fracture occurred in the adhesive layer portion was measured. The measurement results are shown in Tables 1 to 14.
Cohesive failure: State where the resin layer is fractured
Interfacial failure: State where the resin is peeled off at the substrate interface

### [Tg Measurement (Viscoelasticity Measurement)]

Compound (C) preheated to 70°C was added to the main agent (B) such that the amount of compound (C) in the resin composition was 2.5 to 10% by mass, and mixed and defoamed.

After further adding the curing agent (A) and stirring and mixing for 30 seconds, it was mixed and defoamed for 30 to 60 seconds, and poured into a mold with a thickness of 2 mm to mold a urethane resin.

The molded resin was punched out with a punching machine to a width of 5 mm and a length of 5 cm to obtain a dumbbell test piece.

Using a viscoelasticity measuring device (DMA7100; Hitachi High-Tech Science Corporation), Tg was determined from the peak top temperature of the loss tangent (tanδ) under the conditions of measurement mode: tensile, measurement frequency: 10 Hz, heating rate: 2°C/min, measurement temperature range: -150°C to 250°C.

### (Comparative Examples 1 to 17)

As shown in Tables 2 to 14, Comparative Examples 1 to 17 were carried out in the same manner as Examples 1 to 15, except that compound (C) was changed to a functional group-containing compound other than urethane, or was not added. The fracture toughness values (C_{Ic}) obtained by the DCB test are shown in Tables 2 to 14.

**[Table 1]**

| | | | Formulation Amount (g) | | | | | |
|---|---|---|---|---|---|---|---|---|
| | Compound Functional Group | | Urethane | | | | | |
| | Compound Concentration | | 2.5 mass% | | 5.0 mass% | | 10 mass% | |
| | | | Example 1 | | Example 2 | | Example 3 | |
| Resin Composition | Main Agent | MT | 460 | | 460 | | 460 | |
| | | TMP | 21 | | 21 | | 21 | |
| | | PCD3000 (N968) | 326 | | 326 | | 326 | |
| | | PCD500 | 22 | | 22 | | 22 | |
| | Curing Agent | TMP | 33 | | 33 | | 33 | |
| | | BG | 29 | | 29 | | 29 | |
| | | CHDM | 47 | | 47 | | 47 | |
| | | PTMG250 | 7 | | 7 | | 7 | |
| | | MDEA | 10 | | 10 | | 10 | |
| | | p-TolylDEA | 47 | | 47 | | 47 | |
| | Compound (C) | Ethyl N-phenylcarbamate | 26 | | 53 | | 111 | |
| | Compound | Diisononyl Phthalate | - | | - | | - | |
| Additive | Filler | Talc | 256 | - | 263 | - | 278 | - |
| | | Zeolite | 256 | - | 263 | - | 278 | - |
| In-Resin Composition | Urethan Group Concentration (mmol/g) | | 3.4 | | | 3.325 | 3.15 | |
| | Cross-linking Density (mmol/g) | | 0.39 | | 0.38 | | 0.36 | |
| | R (Resin) | | 1.05 | | 1.05 | | 1.05 | |
| Physical Properties | G_{Ic} (KJ/m²) | | 1.17 | - | 1.42 | - | 1.47 | - |
| | Cohesive Failure Rate | | 100 | - | 100 | - | 100 | - |
| | Tg (°C) | | - | 89 | - | 81 | - | 70 |

**[Table 2]**

| | | | Formulation Amount (g) | | | | | | | |
|---|---|---|---|---|---|---|---|---|---|---|
| | Compound Functional Group | | - | | Ester | | | | | |
| | Compound Concentration | | 0 mass% | | 2.5 mass% | | 5.0 mass% | | 10 mass% | |
| | | | Comparative Example 1 | | Comparative Example 2 | | Com parative Example 3 | | Comparative Example 4 | |
| Resin Composition | Main Agent | MT | 460 | | 460 | | 460 | | 460 | |
| | | TMP | 21 | | 21 | | 21 | | 21 | |
| | | PCD3000 (N968) | 326 | | 326 | | 326 | | 326 | |
| | | PCD500 | 22 | | 22 | | 22 | | 22 | |
| | Curing Agent | TMP | 33 | | 33 | | 33 | | 33 | |
| | | BG | 29 | | 29 | | 29 | | 29 | |
| | | CHDM | 47 | | 47 | | 47 | | 47 | |
| | | PTMG250 | 7 | | 7 | | 7 | | 7 | |
| | | MDEA | 10 | | 10 | | 10 | | 10 | |
| | | p-TolyIDEA | 47 | | 47 | | 47 | | 47 | |
| | Compound (C) | Ethyl N-phenylcarbamate | - | | - | | - | | - | |
| | Compound | Diisononyl Phthalate | - | | 26 | | 53 | | 111 | |
| Additive | Filler | Talc | 250 | - | 256 | - | 263 | - | 278 | - |
| | | Zeolite | 250 | - | 256 | - | 263 | - | 278 | - |
| In-Resin Composition | Urethan Group Concentration (mmol/g) | | 3.5 | | 3.4125 | | 3.325 | | 3.15 | |
| | Cross-linking Density (mmol/g) | | 0.4 | | 0.39 | | 0.38 | | 0.36 | |
| | R (Resin) | | 1.05 | | 1.05 | | 1.05 | | 1.05 | |
| Physical Properties | G_{Ic} (KJ/m²) | | 1.08 | - | 1.06 | - | 1.00 | - | 1.03 | - |
| | Cohesive Failure Rate | | 100 | - | 100 | - | 100 | - | 100 | - |
| | Tg (°C) | | - | 98 | - | 94 | - | 95 | - | 94 |

**[Table 3]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 4 | | Com parative Example 5 | |
| Resin Composition | Main Agent | NM | 450 | | 450 | |
| | | PCD3000 (N968) | 400 | | 400 | |
| | Curing Agent | TMP | 42 | | 42 | |
| | | BG | 107 | | 107 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 3.42 | | 3.6 | |
| | Cross-linking Density (mmol/g) | | 0.304 | | 0.32 | |
| | R (Resin) | | 1 | | 1 | |
| Physical Values | G_{Ic} (KJ/m²) | | 1.01 | - | 0.83 | - |
| | Cohesive Failure Rate | | 100 | - | 100 | - |
| | Tg (°C) | | - | 87 | - | 108 |

**[Table 4]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 5 | | Comparative Example 6 | |
| Resin Composition | Main Agent | NM | 500 | | 500 | |
| | | PCD3000 (N968) | 330 | | 330 | |
| | Curing Agent | TMP | 48 | | 48 | |
| | | BG | 122 | | 122 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 3.8 | | 4.0 | |
| | Cross-linking Density (mmol/g) | | 0.342 | | 0.36 | |
| | R (Resin) | | 1 | | 1 | |
| Physical Values | G_{Ic} (KJ/m²) | | 0.72 | - | 0.56 | - |
| | Cohesive Failure Rate | | 100 | - | 100 | - |
| | Tg (°C) | | - | 90 | - | 108 |

**[Table 5]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 6 | | Comparative Example 7 | |
| Resin Composition | Main Agent | NM | 550 | | 550 | |
| | | PCD3000 (N968) | 260 | | 260 | |
| | Curing Agent | TMP | 54 | | 54 | |
| | | BG | 136 | | 136 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 4.18 | | 4.4 | |
| | Cross-linking Density (mmol/g) | | 0.38 | | 0.4 | |
| | R (Resin) | | 1 | | 1 | |
| Physical Values | G_{Ic} (KJ/m²) | | 0.47 | - | 0.34 | - |
| | Cohesive Failure Rate | | 100 | - | 100 | - |
| | Tg (°C) | | - | 91 | - | 101 |

**[Table 6]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 7 | | Com parative Example 8 | |
| Resin Composition | Main Agent | NM | 563 | | 563 | |
| | | PCD3000 (N968) | 242 | | 242 | |
| | Curing Agent | TMP | 15 | | 15 | |
| | | BG | 180 | | 180 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 4.275 | | 4.5 | |
| | Cross-linking Density (mmol/g) | | 0.1045 | | 0.11 | |
| | R (Resin) | | 1 | | 1 | |
| Physical Values | G_{Ic} (KJ/m²) | | 0.19 | - | 0.16 | - |
| | Cohesive Failure Rate | | 100 (SCF) | - | 100 (SCF) | - |
| | Tg (°C) | | - | 86 | - | 94 |

**[Table 7]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 8 | | Comparative Example 9 | |
| Resin Composition | Main Agent | NM | 563 | | 563 | |
| | | PCD3000 (N968) | 242 | | 242 | |
| | Curing Agent | TMP | 45 | | 45 | |
| | | BG | 150 | | 150 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 4.275 | | 4.5 | |
| | Cross-linking Density (mmol/g) | | 0.323 | | 0.34 | |
| | R (Resin) | | 1 | | 1 | |
| Physical Values | G_{Ic} (KJ/m²) | | 0.41 | - | 0.31 | - |
| | Cohesive Failure Rate | | 100 | - | 100 (SCF) | - |
| | Tg (°C) | | - | 85 | - | 111 |

**[Table 8]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 9 | | Comparative Example 10 | |
| Resin Composition | Main Agent | NM | 563 | | 563 | |
| | | PCD3000 (N968) | 242 | | 242 | |
| | Curing Agent | TMP | 81 | | 45 | |
| | | BG | 114 | | 150 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 4.275 | | 4.5 | |
| | Cross-linking Density (mmol/g) | | 0.57 | | 0.6 | |
| | R (Resin) | | 1 | | 1 | |
| Physical Values | G_{Ic} (KJ/m²) | | 0.59 | - | 0.35 | - |
| | Cohesive Failure Rate | | 100 | - | 100 | - |
| | Tg (°C) | | - | 95 | - | 111 |

**[Table 9]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 10 | | Comparative Example 11 | |
| Resin Composition | Main Agent | NM | 600 | | 600 | |
| | | PCD3000 (N968) | 190 | | 190 | |
| | Curing Agent | TMP | 60 | | 60 | |
| | | BG | 150 | | 150 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 4.56 | | 4.8 | |
| | Cross-linking Density (mmol/g) | | 0.418 | | 0.44 | |
| | R (Resin) | | 1 | | 1 | |
| Physical Values | G_{Ic} (KJ/m²) | | 0.35 | - | 0.22 | - |
| | Cohesive Failure Rate | | 100 | - | 100 (SCF) | - |
| | Tg (°C) | | - | 95 | - | 117 |

**[Table 10]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 11 | | Comparative Example 12 | |
| Resin Composition | Main Agent | NM | 650 | | 650 | |
| | | PCD3000 (N968) | 120 | | 120 | |
| | Curing Agent | TMP | 95 | | 95 | |
| | | BG | 135 | | 135 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 4.93 | | 5.2 | |
| | Cross-linking Density (mmol/g) | | 0.6745 | | 0.71 | |
| | R (Resin) | | 1 | | 1 | |
| Physical Values | G_{Ic} (KJ/m²) | | 0.24 | - | 0.11 | - |
| | Cohesive Failure Rate | | 100 | - | 100 | - |
| | Tg (°C) | | - | 99 | - | 133 |

**[Table 11]**

| | | | Formulation Amount (g) | | | |
|---|---|---|---|---|---|---|
| | Compound Functional Group | | Urethane | | | |
| | Compound Concentration | | 5.0 mass% | | 0 mass% | |
| | | | Example 12 | | Comparative Example 13 | |
| Resin Composition | Main Agent | NM | 438 | | 500 | |
| | | PCD1000 (N965) | 445 | | 352 | |
| | Curing Agent | TMP | 27 | | 34 | |
| | | BG | 91 | | 114 | |
| | Compound (C) | Ethyl N-phenylcarbamate | 53 | | - | |
| Additive | Filler | Talc | 263 | - | 250 | - |
| | | Zeolite | 263 | - | 250 | - |
| In-Resin Composition | Urethan Group Concentration (mmol/g) | | 3.8 | | 4.0 | |
| | Cross-linking Density (mmol/g) | | 0.2375 | | 0.25 | |
| | R (Resin) | | 1 | | 1 | |
| Physical Values | G_{Ic} (KJ/m²) | | 1.34 | - | 0.87 | - |
| | Cohesive Failure Rate | | 100 | - | 100 | - |
| | Tg (°C) | | - | 60 | - | 71 |

**[Table 12]**

| | | | Formulation Amount (g) | | | | | |
|---|---|---|---|---|---|---|---|---|
| | Compound Functional Group | | Urethane | | Sulfone | | Sulfone | |
| | Compound Concentration | | 5.0 mass% | | 5.0 mass% | | 5.0 mass% | |
| | | | Example 2 | | Comparative Example 14 | | Comparative Example 15 | |
| Resin Composition | Main Agent | MT | 460 | | 460 | | 460 | |
| | | TMP | 21 | | 21 | | 21 | |
| | | PCD3000 (N968) | 326 | | 326 | | 326 | |
| | | PCD500 | 22 | | 22 | | 22 | |
| | Curing Agent | TMP | 33 | | 33 | | 33 | |
| | | BG | 29 | | 29 | | 29 | |
| | | CHDM | 47 | | 47 | | 47 | |
| | | PTMG250 | 7 | | 7 | | 7 | |
| | | MDEA | 10 | | 10 | | 10 | |
| | | p-TolylDEA | 47 | | 47 | | 47 | |
| | Compound (C) | Ethyl N-phenylcarbamate | 53 | | - | | - | |
| | Compound | Ethyl Methyl Sulfone | - | | 53 | | | |
| | | Ethyl Phenyl Sulfone | - | | | | 53 | |
| | | Tributylphosphine Oxide | - | | | | | |
| | | Trioctylphosphine Oxide | - | | | | | |
| Additive | Filler | Talc Zeolite | 263 | - | 263 | - | 263 | - |
| | | | 263 | - | 263 | - | 263 | - |
| In-Resin Composition | Urethan Group Concentration (mmol/g) | | 3.325 | | 3.325 | | 3.325 | |
| | Cross-linking Density (mmol/g) | | 0.38 | | 0.38 | | 0.38 | |
| | R (Resin) | | 1.05 | | 1.05 | | 1.05 | |
| Physical Values | G_{Ic} (KJ/m²) | | 1.42 | - | 1.09 | - | 1.07 | - |
| | Cohesive Failure Rate | | 100 | - | 100 | - | 100 | - |
| | Tg (°C) | | - | 81 | - | 72 | - | 75 |

**[Table 13]**

| | | | Formulation Amount (g) | | | | | |
|---|---|---|---|---|---|---|---|---|
| | Compound Functional Group | | Urethane | | Phosphon | | Phosphon | |
| | Compound Concentration | | 5.0 mass% | | 5.0 mass% | | 5.0 mass% | |
| | | | Example 2 | | Comparative Example 16 | | Comparative Example 17 | |
| Resin Composition | Main Agent | MT | 460 | | 460 | | 460 | |
| | | TMP | 21 | | 21 | | 21 | |
| | | PCD3000 (N968) | 326 | | 326 | | 326 | |
| | | PCD500 | 22 | | 22 | | 22 | |
| | Curing Agent | TMP | 33 | | 33 | | 33 | |
| | | BG | 29 | | 29 | | 29 | |
| | | CHDM | 47 | | 47 | | 47 | |
| | | PTMG250 | 7 | | 7 | | 7 | |
| | | MDEA | 10 | | 10 | | 10 | |
| | | p-TolyIDEA | 47 | | 47 | | 47 | |
| | Compound (C) | Ethyl N-phenylcarbamate | 53 | | - | | - | |
| | Compound | Ethyl Methyl Sulfone | - | | | | | |
| | | Ethyl Phenyl Sulfone | - | | | | | |
| | | Tributylphosphine Oxide | - | | 53 | | | |
| | | Trioctylphosphine Oxide | - | | | | 53 | |
| Additive | Filler | Talc | 263 | - | 263 | - | 263 | - |
| | | Zeolite | 263 | - | 263 | - | 263 | - |
| In-Resin Composition | Urethan Group Concentration (mmol/g) | | 3.325 | | 3.325 | | 3.325 | |
| | Cross-linking Density (mmol/g) | | 0.38 | | 0.38 | | 0.38 | |
| | R (Resin) | | 1.05 | | 1.05 | | 1.05 | |
| Physical Values | G_{Ic} (KJ/m²) | | 1.42 | - | 1.02 | - | 1.04 | - |
| | Cohesive Failure Rate | | 100 | - | 100 | - | 100 | - |
| | Tg (°C) | | - | 81 | - | 81 | - | 79 |

**[Table 14]**

| | | | Formulation Amount (g) | | | | |
|---|---|---|---|---|---|---|---|
| | Compound Functional Group | | Urethane | | | | - |
| | Compound Concentration | | 5.0 mass% | 5.0 mass% | 5.0 mass% | 5.0 mass% | 5.0 mass% |
| | | | Example 2 | Example 13 | Example 14 | Example 15 | Comparative Example 1 |
| Resin Composition | Main Agent | MT | 460 | 460 | 460 | 460 | 460 |
| | | TMP | 21 | 21 | 21 | 21 | 21 |
| | | PCD3000 (N968) | 326 | 326 | 326 | 326 | 326 |
| | | PCD500 | 22 | 22 | 22 | 22 | 22 |
| | Curing Agent | TMP | 33 | 33 | 33 | 33 | 33 |
| | | BG | 29 | 29 | 29 | 29 | 29 |
| | | CHDM | 47 | 47 | 47 | 47 | 47 |
| | | PTMG250 | 7 | 7 | 7 | 7 | 7 |
| | | MDEA | 10 | 10 | 10 | 10 | 10 |
| | | p-TolylDEA | 47 | 47 | 47 | 47 | 47 |
| | Compound (C) | Ethyl N-phenylcarbamate | 53 | | | | - |
| | | Methyl N-phenylcarbamate | | 53 | | | - |
| | | Ethyl N-methylcarbamate | | | 53 | | - |
| | | Methyl N-methylcarbamate | | | | 53 | - |
| Additive | Filler | Talc | 263 | 263 | 263 | 263 | 250 |
| | | Zeolite | 263 | 263 | 263 | 263 | 250 |
| In-Resin Composition | Urethan Group Concentration (mmol/g) | | 3.325 | 3.325 | 3.325 | 3.325 | 3.5 |
| | Cross-linking Density (mmol/g) | | 0.38 | 0.38 | 0.38 | 0.38 | 0.4 |
| | R (Resin) | | 1.05 | 1.05 | 1.05 | 1.05 | 1.05 |
| Physical Values | G_{Ic} (KJ/m²) | | 1.42 | 1.25 | 1.43 | 1.45 | 1.08 |
| | Cohesive Failure Rate | | 100 | 100 | 100 | 100 | 100 |

## Claims

1. A urethane resin-forming composition, comprising:
a curing agent (A) containing a polyol,
an isocyanate group-terminated prepolymer (B), and
a compound (C),
wherein the compound (C) is a compound represented by formula (1):
R¹-NHCOO-R² (1)
wherein R¹ and R² are each independently an alkyl group, an alicyclic hydrocarbon group, an aryl group, or a heterocyclic group.

2. The composition according to claim 1, wherein the curing agent (A) contains a cross-linking component (a-1).

3. The composition according to claim 1, wherein the curing agent (A) contains at least one diol (a-2) selected from the group consisting of aliphatic diols and alicyclic diols.

4. The composition according to claim 1, wherein the curing agent (A) contains:
a cross-linking component (a-1), and
at least one diol (a-2) selected from the group consisting of aliphatic diols and alicyclic diols.

5. The composition according to claim 1, wherein the isocyanate group-terminated prepolymer (B) contains a reaction product of:
a polyol (b-1) having a number average molecular weight of 500 or more,
a polyisocyanate (b-2), and
a cross-linking component (b-3) which is an optional component.

6. The composition according to claim 1, wherein
the curing agent (A) contains:
a cross-linking component (a-1), and
at least one diol (a-2) selected from the group consisting of aliphatic diols and alicyclic diols, and
the isocyanate group-terminated prepolymer (B) contains a reaction product of:
a polyol (b-1) having a number average molecular weight of 500 or more,
a polyisocyanate (b-2), and
a cross-linking component (b-3) which is an optional component.

7. The composition according to claim 1, wherein the isocyanate group-terminated prepolymer (B) contains a reaction product of:
a polyol (b-1) having a number average molecular weight of 500 or more,
a polyisocyanate (b-2), and
a cross-linking component (b-3) which is an optional component,
wherein the polyol (b-1) has a carbonate bond.

8. The composition according to claim 1, wherein
the curing agent (A) contains:
a cross-linking component (a-1), and
at least one diol (a-2) selected from the group consisting of aliphatic diols and alicyclic diols, and
the isocyanate group-terminated prepolymer (B) contains a reaction product of:
a polyol (b-1) having a number average molecular weight of 500 or more,
a polyisocyanate (b-2), and
a cross-linking component (b-3) which is an optional component,
wherein the polyol (b-1) has a carbonate bond.

9. The composition according to any one of claims 1 to 8, wherein a urethane group concentration of a resin obtained by curing the urethane resin-forming composition is 2000 mmol/kg or more and 5500 mmol/kg or less.

10. The composition according to any one of claims 1 to 8, wherein a total of a content of cross-linkable groups contained in the curing agent (A) and a content of cross-linkable groups contained in the isocyanate group-terminated prepolymer (B) is 50 mmol/kg or more and 1000 mmol/kg or less in the urethane resin-forming composition.

11. The composition according to any one of claims 1 to 8, wherein a melting point of the compound (C) is 100°C or less.

12. A urethane adhesive composition, comprising the urethane resin-forming composition according to any one of claims 1 to 8.

13. The composition according to claim 12, wherein a content of solvent is 1.0% by mass or less.

14. An adhesive for automobile structure, comprising the composition according to claim 12.

15. A cured product of the composition according to any one of claims 1 to 8.
